# EUROPEAN PATENT SPECIFICATION

(11) **EP 0 386 762 B1**
(45) Date of publication and mention of the grant of the patent: **04.01.1995**
(21) Application number: 90104451.1
(22) Date of filing: 08.03.1990
(51) Int. Cl.: G11B 5/842, G11B 5/845

(54) **Magnetic disk and process and apparatus for producing the same**
Magnetplatte und Verfahren und Apparat zu ihrer Herstellung
Disque magnétique et procédé et dispositif pour sa fabrication

(30) Priority: 09.03.1989 JP 55007/89
(43) Date of publication of application: 12.09.1990
(73) Proprietor: HITACHI, LTD., Chiyoda-ku, Tokyo 101 (JP)
(72) Inventor: Chiba, Katsuyoshi, Hachioji-shi (JP); Katsumoto, Masayuki, Kodaira-shi (JP); Uesaka, Yasutaro, Kokubunji-shi (JP); Fukke, Hajime, Tama-shi (JP); Ishihara, Heigo, Nishitama-gun, Tokyo (JP); Matsuyama, Iwao, Sagamihara-shi (JP); Kodama, Naoki, Tachikawa-shi (JP); Inoue, Hitoshi, Hitachi Daini Kyoshinryo, Kokubunji-shi (JP); Terada, Yoshiharu, Hitachi Daiyon Kyoshinryo, Kokubunji-shi (JP)
(74) Representative: Beetz & Partner Patentanwälte

(56) References cited:
- US-A- 4 330 728
- US-A- 4 759 775
- PATENT ABSTRACTS OF JAPAN, vol. 9, no. 227 (P-388), 13th September 1985;& JP-A-60 083 224 (FUJITSU) 11-05-1985
- PATENT ABSTRACTS OF JAPAN, vol. 11, no. 194 (P-588), 23rd June 1987;& JP-A-62 018 629 (MATSUSHITA ELECTRIC) 27-01-1987
- "Lexikon der Physik", Hermann Franke, Frankh'sche Verlagshandlung, W. Keller & Co., Stuttgart 1969, Band 6 Lie-Oz, p.281 and Band 7 P-Re, p.99.
- "Mechanik-Akustik und Wärmelehre", Robert Wichard Pohl, 16. Aufl., Springer Verlag, Berling - Göttingen - Heidelberg- New York, 1964, p.180-181.

## Description

### BACKGROUND OF THE INVENTION

This invention relates to a coating type magnetic disk for use in memory apparatus, etc., and a process and an apparatus for producing the magnetic disk.

Heretofore, a coating type magnetic disk has been produced by dispersing magnetic powders in a binder (macromolecular binder) or its solution in a sand mill, kneader or ball mill, thereby preparing a magnetic paint and applying the magnetic paint to a substrate, followed by orientation, if required, and by heat curing and polishing. If further required, a lubricant is applied to the coating film. A thermo-setting resin is usually used as a binder, and thus can be thermally cured, and sometimes a binder may be used only with heating. The magnetic paint is stirred during the preservation to prevent the magnetic powders from reaggregation.

With recent progress of higher density magnetic disks, magnetic powders composed of finer particles have been used. In a magnetic paint containing such magnetic powders, the magnetic powders are liable to reaggregate and it is difficult to completely prevent the reaggregation only by the stirring. To solve this problem, Japanese Patent Application Kokai (Laid-open) No. 62-18629 Propose to uniformly apply magnetic paint to a substrate to a predetermined thickness, applying an ultrasonic vibration thereto, and immediately thereafter applying a uniform magnetic field thereto, thereby orienting magnetic powders. Even if reaggregation takes place, the structure of reaggregation is broken by the proposed process and the rotational motion of magnetic powders by orientation under a magnetic field is facilitated to attain a high orientation and improve the hysterisis loop squareness. Japanese Patent Application Kokai (Laid-open) No. 60-83224 proposes to produce a perpendicularly oriented magnetic disk by applying a perpendicular magnetic field and ultrasonic vibration to the substrate, and discloses the precharacterizing features of the process claim 1 and of the apparatus claim 7.

However, in the above-mentioned Japanese Patent Application Kokai (Laid-open) No. 62-18629 no consideration is given to the production of a magnetic disk of higher density having distinguished electromagnetic properties as a longitudinally oriented magnetic recording medium, for example, good S/N (signal/noise) ratio and hysteresis loop squareness. That is, the above-mentioned process is directed to the production of not a magnetic disk, but a magnetic tape. A magnetic tape has a thick coating film (thickness: more than 1 µm) and a magnetic paint as a material for such a coating film has a high viscosity, for example, 1 to 2 Pa·s (1,000 to 2,000 cp). Thus, in the magnetic paint once highly dispersed by ultrasonic vibration, the magnetic powders do not reaggregate in a short time and thus can be readily oriented by applying a magnetic thereto right after the dispersion of magnetic powders in a coating film state. On the other hand, a magnetic disk of higher density has a thin coating film (thickness: not more than 0.75 µm). As a material for such a coating film, a magnetic paint having a low viscosity, for example, not more than 0.5 Pa·s (500 cp), must be used. In a magnetic paint of low viscosity the magnetic powders more readily aggregate than in a magnetic paint of high viscosity, and thus the degree of aggregation in a coating film state is considerably higher in a magnetic paint of low viscosity than in that of high viscosity. Thus, the structure of aggregates is hard to break even by applying ultrasonic vibration usually used in the above-mentioned prior art thereto and the coating film is not brought into a highly dispersed state of magnetic powders. Furthermore, if there is a time difference, even though short, between the application of ultrasonic vibration and the application of magnetic field for orientation, the dispersed magnetic powders will aggregate again, corresponding to the time difference. Thus, the magnetic disks thus prepared have problems in electromagnetic properties, for example, deterioration of hysteresis loop squareness, etc.

The perpendicularly oriented magnetic disk disclosed in the above-mentioned Japanese Patent Application Kokai (Laid-open) No. 60-83224 has problems in electromagnetic properties such as a low S/N ratio, easy occurrence of defects, a low output, etc., as compared with the longitudinally oriented magnetic disk, owing to such a peculiar property as perpendicular orientation of magnetic powders.

### SUMMARY OF THE INVENTION

An object of the present invention is to provide a process for producing a longitudinally oriented magnetic disk of high density with distinguished electromagnetic properties, using a magnetic paint containing at least magnetic powders in a dispersed state while preventing the magnetic powders from reaggregation.

Another object of the present invention is to provide a longitudinally oriented magnetic disk produced according to the present process.

Other object of the present invention is to provide an apparatus for a magnetic disk according to the present process.

These objects can be attained by:
(1) a process for producing a magnetic disk, as claimed in claim 1;
(2) a magnetic disk, as claimed in claim 5;
   and an apparatus for producing a magnetic disk, as claimed in claim 7.

Additional advantageous features are claimed in claims 2-4, 6 and 8-11. The mode of flectional plate vibrations is classified into three types, that is, a concentric circle type mode, a random type mode and an interference type mode. By applying flectional plate vibrations to, for example, a substrate, the magnetic powders are dispersed, where the dispersion is carried out by an interfacial tension wave, a kind of surface wave. A case of the concentric circle type mode will be later explained, referring to Fig. 3, a case of the random type mode will be explained, referring to Fig. 4 and a case of the interference type mode will be explained referring to Fig. 5B and Fig. 5D.

In the present invention, dispersion and orientation of magnetic powders can be improved by application of a magnetic field for orientation or rotation of a magnetic disk when the flectional plate vibrations are applied to the magnetic recording film, as compared with the case of applying only flectional plate vibrations. The magnetic field may be an uneven magnetic field. Application of a magnetic field may be made after the application of flectional plate vibrations.

Preferably, the magnetic paint for use in the present invention contains a filler such as alumina, etc. besides the magnetic powder. Preferably, the non-magnetic substrate for use in the present invention is composed of a material capable of directly and effectively propagating flectional plate vibrations, for example, a metal substrate or a ceramic substrate.

In the present invention, a magnetic disk is prepared by forming a coating film to a thickness of about 0.55 ± 0.05 µm or less in the inner peripheral region of a disk, for example, an 5-inch aluminum disk (40.0 mm in inner diameter, 130 mm in outer diameter and 1.9 mm thick) and to a thickness of about 0.65 ± 0.05 µm or less in the outer peripheral region thereof, heat curing the coating film and polishing the cured coating film to a thickness of not more than about 0.35 µm in the inner peripheral region and to a thickness of not more than 0.45 µm in the outer peripheral region. In this manner, a magnetic disk with a recording density of, for example, 30,000 BPI or more can be obtained.

By applying flexional plate vibrations to the non-magnetic substrate coated with a magnetic paint, the magnetic powders are dispersed and oriented in the coating film. Ultrasonic vibration disclosed in the prior art of the above-mentioned Japanese Patent Application Kokai (Laid-open) No. 62-118629 and Japanese Patent Application Kokai (Laid-open) No. 60-83224 is merely to cause vertical vibration of a substrate (tape or disk) in the thickness direction, whereas the present flexional plate vibrations are waves propagating in the longitudinal direction of a substrate and thus are effective for disintegrating aggregates of magnetic powders or separating the aggregates in contact from one another and they are effective for the dispersion and orientation of the magnetic powders. In the present invention, the ultrasonic vibration is only a means for generating flectional plate vibrations. State of dispersion and orientation of the magnetic powders depends on the mode of applied flectional plate vibrations as already mentioned above, and the mode thereof is classified into three types, that is, a concentric circle type mode, a random type mode and an interference type mode.

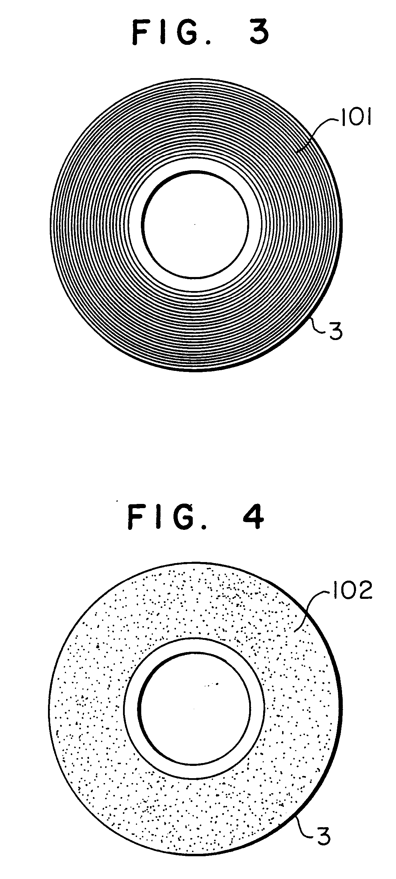

Differences in the modes will be explained below, referring to Fig. 3, Fig. 4 and Fig. 5B.

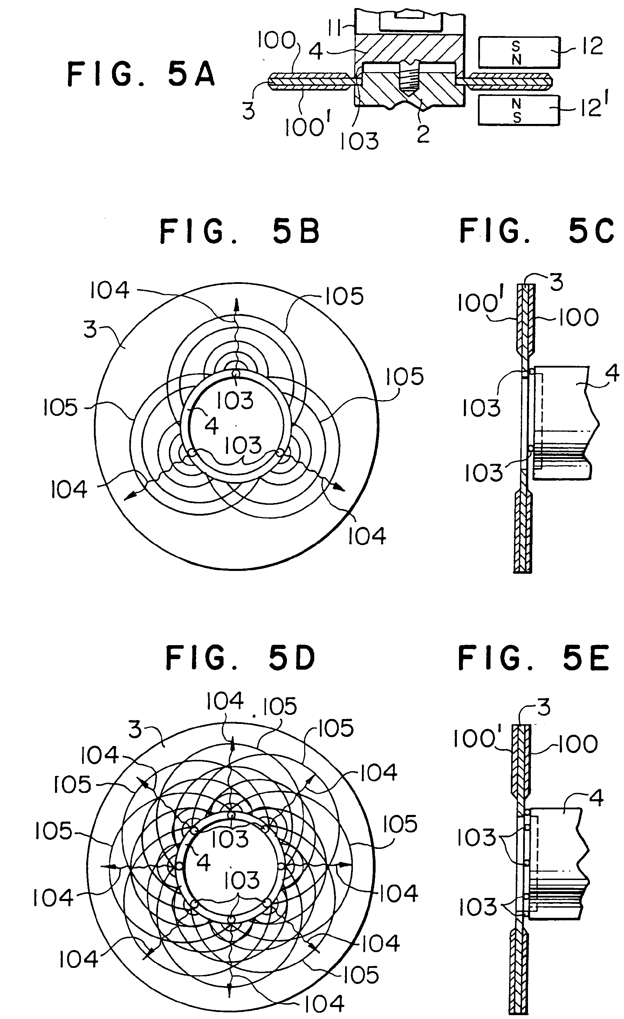

Explanation will be made, referring to a case where a flectional plate vibrator 4 has three projections 103 arranged on the periphery at equal angular positions, as shown in Fig. 5B.

Fig. 3 is a plan view of a magnetic disk, showing the state of dispersion and orientation of magnetic powders when flexional plate vibrations of concentric type mode are applied. The concentric circle type mode can be generated when the frequency, phase and amplitude of surface waves applied to the above-mentioned three projections are equal to one another, respectively, and further when the frequency is equal to a resonance frequency proper to a substrate (strictly speaking, a magnetic paint film included). In that case, the resulting flexional plate vibrations are standing waves. For example, in case of an aluminum disk, 5.25 inches in diameter (40.0 mm in inner diameter and 130 mm in outer diameter) and 2 mm thick as a substrate, vibration may be made with a frequency of about 37 kHz (variable in a range of 1 to 100 W) or its integral multiple. In that case, the resulting flexional plate vibrations are standing waves. The magnetic powders are distributed in concentric circles with respect to the disk center and with a density gradient in the radial direction. The number of repetitions of the density gradient can be changed by the frequency of the surface waves. The effect is more pronounced by rotation of the disk.

Fig. 4 is a plan view of a magnetic disk, showing the state of dispersion and orientation of magnetic powders when flectional plate vibrations of random type mode are applied. The random type mode is obtained when the phase of said vibrations applied to at least one of the three projections is different from those of the flexional plate vibrations to other projections. The magnetic powders are distributed with a uniform density, but their orientation is at random.

Fig. 5B shows the state of flexional plate vibrations in the longitudinal direction of a magnetic disk when said vibrations of interference type mode are applied. The interference type mode is obtained when the balance of flectional plate vibration propagation from the above-mentioned three projections is disturbed. For example, there is a difference in pressure of the three projections on the substrate. The magnetic powders are unevenly distributed in the thickness direction of the magnetic recording film. The projections are parts of a flectional plate vibrator that gives flectional plate vibrations to a substrate and include not only artificially processed projections, but also parts in the flectional plate vibrator, where the parts ultimately serve to give flectional plate vibrations to the substrates. The conditions for the projections capable of generating flectional plate vibrations are locations of projections (a distance from the disk center, a distance between the projections, etc.) number of projections, and contact area and pressure of projections. It is desirable to locate the projections at and along the central region of the disk, but the present invention is not limited to the locations at and along the central region of the disk and various locations can be made. For example, projections may be located unevenly in some region to make longitudinal orientation only in a desired region of the disk.

Metals (e.g. aluminum, etc.) or ceramics (e.g. glass, etc.) have a high vibration-propagating speed, and when these materials are used for a disk substrate, the flectional plate vibrations are more readily generated, irrespective of projection contact positions. At least one projection is satisfactory and particularly in the case of one projection, it is preferable to provide a false projection made from an elastomer (e.g. rubber, teflon, etc.) to stably support the flectional plate vibrator on the disk surface. In that case, the flectional plate vibrations are standing waves of concentric circle type mode. The contact area of projection must be so small as to regard it as a point in contrast to the disk area, or otherwise no flectional plate vibrations are generated but ultrasonic vibration takes place as in the prior art. The contact pressure of projection must be set to such a value as to allow the flectional plate vibrations to propagate.

Structure of reaggregates of magnetic powders in a magnetic recording film, even if formed, can be broken by applying a magnetic paint containing magnetic powders dispersed in a macromolecular binder to a non-magnetic substrate thereby forming a magnetic recording film, and applying flectional plate vibrations to the substrate while the magnetic recording film is in an undried state. Furthermore, by applying a magnetic field thereto, the magnetic powders can be oriented in a desired direction.

When the magnetic powders are fine powders having an average particle size of, for example, not more than 0.4 µm, preferably not more than 0.2 µm, the resistance of the magnetic powders is so small during the movement and rotation in the magnetic recording film that the magnetic powders can be oriented in some direction, desirably in a longitudinal direction without any application of a magnetic field, when the resonance frequency of magnetic powders is substantially in agreement with the frequency of flectional plate vibrations applied to the substrate.

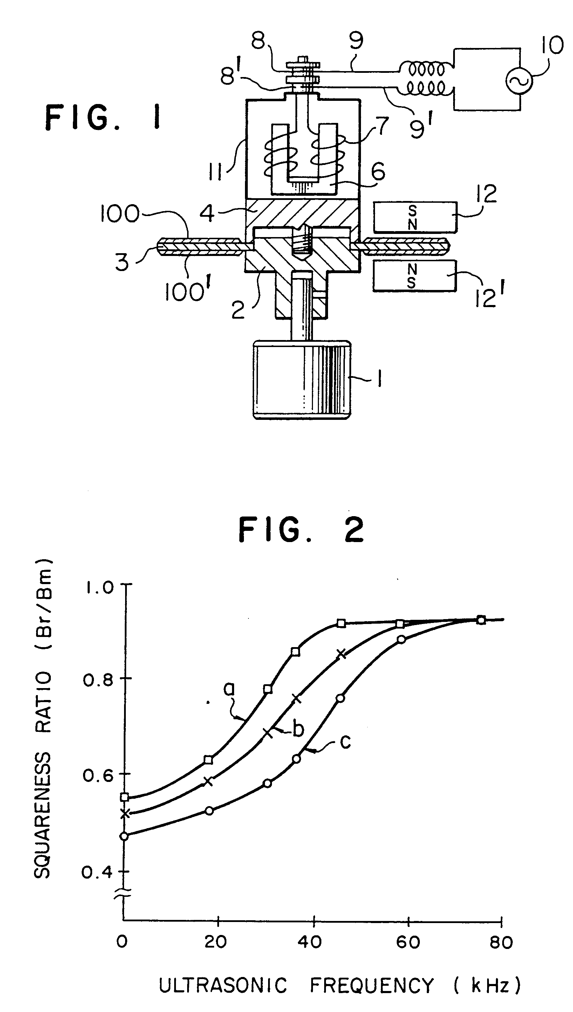

One embodiment of the present apparatus for producing a magnetic disk is schematically and cross-sectionally shown in Fig. 1 and Fig. 5.

A mount 2 made from a material capable of damping a phase-variable ultrasonic wave, such as Teflon (polytetrafluoroethylene), etc. is provided rotatably by a motor 1, and an aluminum substrate 3 is mounted on the mount 2. A metallic flectional plate vibrator 4 is set to the aluminum substrate 3 by screwing so as to directly transmit flectional plate vibrations to the aluminum substrate 3. An ultrasonic wave vibrator 6 is fixed to the flectional plate vibrator 4 and these two are mechanically connected. A coil 7 is wound around the ultrasonic wave vibrator 6, and a driving current is supplied to the coil 7 from an ultrasonic wave oscillator 10 through electrode slip rings 8 and 8′ and electroconductive sliding pins 9 and 9′. In order to increase the ultrasonic wave vibration efficiency, a vessel 11 is filled with a resin. The mount 2 may be provided above the substrate 3 and the flectional plate vibrator 4 may be provided below the substrate 3. A pair of magnets 12 and 12′ is provided on both sides of the disk 3 to sandwich the disk 3, as shown in Fig. 1 and Fig. 5A, so as to apply a magnetic field thereto, where a repulsion field can be obtained. The magnets can be provided at various locations, for example, by shifting the vertical levels, etc., as disclosed in Japanese Patent Publication No. 56-45210.

The flectional plate vibrator 4 shown in Fig. 1 is in a circular ring form, whereas in the case of the flectional plate vibrator 4 shown in Fig. 5B and Fig. 5C, projection 103 are provided at parts in contact with the disk substrate. Fig. 5B and Fig. 5C show a 3-point interference mode, and Fig. 5D and Fig. 5E show an 8-point interference mode. It is needless to say that other multiple-point inference modes are effectively available.

In Fig. 1 one embodiment of an apparatus suitable for dispersion and orientation of magnetic powders in a magnetic paint layer applied to a substrate by another coater is shown, but in the same apparatus, coating of a magnetic paint, and dispersion, orientation and orientation of the magnetic powders under a magnetic field can be carried out. For example, magnets are made to be movable, and a magnetic paint is applied to a substrate in a magnets-removed state, and then the magnets are provided again at the predetermined location to conduct dispersion, orientation and orientation under a magnetic field. In Fig. 1, Fig. 5A, Fig. 5C and Fig. 5E, numerals 100 and 100′ are magnetic recording films.

### BRIEF DESCRIPTION OF THE DRAWINGS

Fig. 1 is a cross-sectional schematic view of an apparatus for producing a magnetic disk according to one embodiment of the present invention.

Fig. 2 is a diagram showing a relationship between the ultrasonic frequency applied to a flectional plate vibrator and the squareness ratio.

Fig. 3 is a plan view of a magnetic disk of concentric circle type mode, showing the state of dispersion and orientation of magnetic powders when flectional plate vibrations are applied, where numeral 101 shows a concentric circle type mode.

Fig. 4 is a plan view of a magnetic disk of random type mode, showing the state of dispersion and orientation of magnetic powders, when flectional plate vibrations are applied, where numeral 102 shows a random type mode.

Fig. 5A is a cross-sectional view of flectional plate vibrator part having projections in an apparatus for producing a magnetic disk according to another embodiment of the present invention.

Fig. 5B and Fig. 5C are a view showing the in-plane state of a magnetic disk of interference type mode flectional plate vibrations when a flectional plate vibrator having three projections is used and a cross-sectional, schematic view of flectional plate vibrator part, respectively, where numeral 104 shows flectional plate vibrations, and numeral 105 shows interference type modes.

Fig. 5D and Fig. 5E are a view showing the in-plane state of a magnetic disk of interference type mode flectional plate vibrations when a flectional plate vibrator having eight projections is used, and a cross-sectional, schematic view of flectional plate vibrator part, respectively.

### DETAILED DESCRIPTION OF THE PREFERRED EMBODIMENTS

The present invention will be explained in detail below, referring to Examples.

### Example 1

70 g of polyvinylbutyral powders and 700 g of needle-like γ-Fe₂O₃ magnetic powders (average particle size: 0.35 x 0.06 µm; coercivity Hc: 23 873 A/m (330 Oe); specific surface area BET: 22 m²/g) were placed in a kneader and kneaded for about 15 minutes. Then, 250 g of 2-ethoxyethyl acetate was slowly added thereto, and the mixture was further kneaded for about 4 hours. Then, 480 g of the kneaded mixture was placed in a ball mill pot having a capacity of 3 ℓ together with 3 g of alumina and 700 g of 2-ethoxyethyl acetate and the mixture was subjected to ball mill mixing for 7 days to thoroughly disperse the magnetic powders and alumina. Then, 120 g of phenol resin, 300 g of 40% epoxy resin solution in butoxyethanol and 500 g of butoxyethanol were added thereto and the mixture was further mixed to prepare a magnetic paint. Then, the thus obtained magnetic paint was applied to the cleaned surfaces of an aluminum disk 3, 5.25 inches in diameter (40 mm in inner diameter and 130 mm in outer diameter) and 2 mm thick, by spin coating, and then immediately the aluminum disk was placed in an apparatus for producing a magnetic disk, shown in Fig. 1 and subjected to application of random type mode flectional plate vibrations and longitudinal orientation under a magnetic field simultaneously for 30 ± 5 seconds. Then, the coating films was cured at 210°C to form magnetic recording films 100 and 100′. The flectional plate vibrator 4 having a flat contact surface to the magnetic disk substrate 3 without any artificial projections was used. Flectional plate vibrations of random type mode were generated by adjusting the degree of fastening between the flectional plate vibrator 4 and the substrate 3. Then, the squareness ratio of magnetic recording films was measured.

Relationship between the ultrasonic frequency applied to the flectional plate vibrator 4 and the squareness ratio (Br/Bm) of the thus obtained magnetic recording films is shown by curve a in Fig. 2. As is obvious from Fig. 2, the magnetic disk having a squareness ratio of more than 0.55, standard level for quality product, was obtained by application of flectional plate vibrations. With increasing ultrasonic frequency, the squareness ratio was increased, and with further increase in the ultrasonic frequency, the squareness ratio was saturated. The ultrasonic frequency was preferably 30 kHz or more, more preferably 35 kHz or more.

After the measurement of the squareness ratio, the magnetic recording films were surface finished to a film thickness in the inner peripheral region of 0.32 µm.

The recording-reproduction characteristics of the magnetic disk were determined with a MnZn ferrite head with a gap length of 0.5 µm, and it was found that the S/N ratio was increased by 5 - 10%, as compared with that of the conventional magnetic disks prepared without any application of flectional plate vibrations.

### Example 2

The same treatment as in Example 1 was carried out except that needle-like Co-γ-Fe₂O₃ magnetic powders (average particle size: 0.40 x 0.07 µm; coercivity Hc: 51725 A/m (650 Oe); specific surface area BET: 22.5 m²/g) were used in place of the needle-like γ-Fe₂O₃ magnetic powders. The squareness ratio was found smaller. Then, the same treatment was carried out by changing the mode of the flectional plate vibrations from the random type mode to a concentric circle type mode. A flectional plate vibrator 4 having 3 projections on the periphery at equal angular distances was used, as given by numerals 103 in Figs. 5B and 5C. The result is given by curve b in Fig. 2. The S/N ratio was increased by 5-10%, as compared with that of the conventional magnetic disks.

### Example 3

The same treatment as in Example 1 was carried out except that needle-like Co-γ-Fe₂O₃ fine magnetic powders (average particle size: 0.2 x 0.02 µm; coercivity Hc: 61274 A/m (770 Oe); specific surface area BET: 50 m²/g) was used in place of the needle-like γ-Fe₂O₃ magnetic powders. The squareness ratio was found smaller. Even by application of flectional plate vibrations of concentric circle type mode as used in Example 2, the same result as above was obtained. Thus, flectional plate vibrations of interference type mode were applied with the same flectional plate vibrator 4 of concentric circle type mode as used in Example 2, as shown in Figs. 5B and 5C. The result is given by curve c in Fig. 2. The S/N ratio was increased by 5-10%, as compared with that of the conventional magnetic disks. As shown in Examples 1 to 3, the effect on dispersion and orientation became lower in the order of random type mode and concentric circle type mode with increasing coercivity Hc and specific surface area BET of the magnetic powders, and it was found necessary to use interference type mode having a highest effect on dispersion and orientation.

### Example 4

25 parts by weight of powdery epoxy resin, 100 parts by weight of plate-like barium ferrite magnetic powders of hexagonal system (about 0.1 µm in diameter; coercivity Hc: 62123 A/m (655 Oe); specific surface area BET: 30 m²/g) and 5 parts by weight of single crystal alumina were thoroughly mixed and then 10 parts by weight of cyclohexanone was added thereto. Then, the mixture was kneaded in a kneader and after addition of 5 parts by weight of cyclohexanone thereto the mixture was further kneaded for about 4 hours.

Then, the kneaded product was placed in a ball mill pot having a capacity of 3 ℓ and 140 parts by weight of a solvent mixture (1 : 1) of cyclohexanone and isophorone was added thereto. The mixture was subjected to ball mill mixing for 3 days to disperce the magnetic powders. Then, 25 parts by weight of phenol resin and 6 parts by weight of vinyl resin were dissolved in 490 parts by weight of a solvent mixture (1 : 1 : 1) of cyclohexanone, isophorone and dioxane, and the resulting solution was added to the mixture to prepare a magnetic paint. Then, the magnetic paint was applied to cleaned surfaces of an aluminum substrate 3, 133.4 mm (5.25) inches in diameter and 2 mm thick, by spin coating. Then, the magnetic disk was placed in an apparatus for producing a magnetic disk and flectional plate vibrations of interference type mode were applied thereto. In that case, a flectional plate vibrator 4 having three projections as used in Examples 2 and 3 was used, as shown in Figs. 5B and 5C. Coating films with orientation only by application of flectional plate vibrations of interference type mode and coating films with longitudinal orientation by simultaneous application of a magnetic field were prepared. The coating films were then cured at 210°C to form magnetic recording films 100 and 100′, and their squareness ratio was measured. Then, the magnetic recording films were surface finished to a thickness of 0.3 µm (roughness Ra < 0.02 µm), and a fluorocarbon-based liquid lubricant was applied thereto to prepare magnetic disks. Recording-production characteristics of the magnetic disks were determined with a metal-in-gap type head with a gap length of 0.3 µm, and it was found that the S/N ratio was increased by 2-6% in the case of orientation without application of magnetic field and by 7-12% in the case of orientation with simultaneous application of magnetic field, as compared with that of the conventional magnetic disks prepared without application of flectional plate vibrations.

Relationship between the ultrasonic frequency applied to the flectional plate vibrator 4 and the squareness ratio of the magnetic recording films prepared with orientation by simultaneous application of magnetic field was found to be substantially the same as that of Example 3, given by curve c in Fig. 2. That is, it was found that the magnetic powders were oriented in the better direction by application of flectional plate vibrations of interference type mode even in the case of plate-like magnetic powders.

According to the present invention, a magnetic disk with distinguished electromagnetic properties such as high S/N ratio, etc. can be prepared while preventing the magnetic powders in a magnetic paint from reaggregation.

## Claims

1. A process for producing a magnetic disk, which comprises applying a magnetic paint containing at least magnetic powders in a dispersion state in a macromolecular binder to a non-magnetic substrate (3) and then orienting the magnetic powders by applying vibrations to the non-magnetic substrate (3), thereby forming a magnetic recording film (100, 100′) on the non-magnetic substrate (3),
**characterized** in that
said vibrations are flectional plate vibrations (104, 105) of a concentric circle type mode or a random type mode or an interference type mode and that the applied magnetic paint is kept in an undried state while applying said flectional plate vibrations.

2. A process according to claim 1, wherein the flectional plate vibrations are standing waves (104) or interference waves (105).

3. A process according to claim 1, wherein a magnetic field is applied longitudinally when the flectional plate vibrations (104, 105) are applied to the non-magnetic substrate (3) and the applied magnetic paint.

4. A process according to claim 3, wherein the magnetic powders are plate-like powders of barium ferrite of hexagonal system.

5. A magnetic disk produced by the process of claim 1, which comprises a non-magnetic substrate (3) and a magnetic recording film (100, 100′) containing at least magnetic powders in a dispersed and oriented state in a macromolecular binder, provided on the non-magnetic substrate (3),
**characterized** in that
the magnetic powders are distributed in concentric circles (101) with a density gradient in the radial direction and longitudinally oriented.

6. A magnetic disk according to claim 5, wherein the density gradient is repeatedly provided in the radial direction.

7. An apparatus for producing a magnetic disk, which comprises a mount (2) for supporting a non-magnetic substrate having a magnetic recording film (100, 100′) containing at least magnetic powders in a dispersed state in a macromolecular binder, the magnetic recording film (100, 100′) being in an undried state, and a vibrator (4) for causing vibrations to the non-magnetic substrate (3) with the magnetic recording film (100, 100′),
**characterized** in that
said vibrator (4) serves to cause flectional plate vibrations to said substrate (3) with the magnetic recording film (100, 100′) being in an undried state.

8. An apparatus according to claim 7, wherein said flectional plate vibrator (4) is mechanically connected to an ultrasonic vibrator (6).

9. An apparatus according to claim 8, wherein said flectional plate vibrator (4) has a projection (103) in contact with the non-magnetic substrate (3).

10. An apparatus according to claim 9, wherein a plurality of projections (103) are provided at equal angular distances on the periphery as the projection.

11. An apparatus according to claim 7, wherein at least one pair of magnets (12, 12′) are provided on both sides of the non-magnetic substrate (3) to sandwich the non-magnetic substrate (3), thereby applying a longitudinal magnetic field to the magnetic recording film (100, 100′).

## Patentansprüche

1. Verfahren zur Herstellung einer Magnetplatte, das die Aufbringung eines magnetischen Anstrichs, der wenigstens magnetische Pulver in einem Dispersionszustand in einem makromolekularen Bindemittel enthält, auf ein nichtmagnetisches Substrat (3) und danach die Ausrichtung der magnetischen Pulver durch Einwirken von Schwingungen auf das nichtmagnetische Substrat (3) aufweist, wodurch ein magnetischer Aufzeichnungsfilm (100, 100′) auf dem nichtmagnetischen Substrat (3) gebildet wird,
dadurch **gekennzeichnet**,
daß die Schwingungen Plattenbiegungsschwingungen (104, 105) einer konzentrischen Kreistypart oder einer Zufallstypart oder einer Interferenztypart sind und daß der aufgebrachte magnetische Anstrich während des Einwirkens der Plattenbiegungsschwingungen in einem ungetrockneten Zustand gehalten wird.

2. Verfahren nach Anspruch 1,
bei dem die Plattenbiegungsschwingungen stehende Wellen (104) oder Interferenzwellen (105) sind.

3. Verfahren nach Anspruch 1,
bei dem ein Magnetfeld längs angelegt wird, wenn die Plattenbiegungsschwingungen (104, 105) auf das nichtmagnetische Substrat (3) und den aufgebrachten magnetischen Anstrich einwirken.

4. Verfahren nach Anspruch 3,
bei dem die magnetischen Pulver plättchenförmige Pulver von Bariumferrit des hexagonalen Systems sind.

5. Nach dem Verfahren des Anspruchs 1 hergestellte Magnetplatte, die ein nichtmagnetisches Substrat (3) und einen magnetischen Aufzeichnungsfilm (100, 100′) aufweist, der wengistens magnetische Pulver in einem dispergierten und ausgerichteten Zustand in einem makromolekularen Bindemittel enthält und auf dem nichtmagnetischen Substrat (3) vorgesehen ist,
dadurch gekennzeichnet,
daß die magnetischen Pulver in konzentrischen Kreisen (101) mit einem Dichtegradient in der Radialrichtung verteilt und längs ausgerichtet sind.

6. Magnetplatte nach Anspruch 5,
bei der der Dichtegradient in der Radialrichtung wiederholt vorgesehen ist.

7. Vorrichtung zur Herstellung einer Magnetplatte, die einen Träger (2) zum Halten eines nichtmagnetischen Substrats mit einem magnetischen Aufzeichnungsfilm (100, 100′), der wenigstens magnetische Pulver in einem dispergierten Zustand in einem makromolekularen Bindemittel enthält, welcher magnetische Aufzeichnungsfilm (100, 100′) in einem ungetrockneten Zustand ist, und einen Vibrator (4) zum Einwirken von Schwingungen auf das nichtmagnetische Substrat (3) mit dem magnetischen Aufzeichnungsfilm (100, 100′) aufweist,
dadurch gekennzeichnet,
daß der Vibrator (4) zum Einwirken von Plattenbiegungsschwingungen auf das Substrat (3) mit dem in einem ungetrockneten Zustand befindlichen magnetischen Aufzeichnungsfilm (100, 100′) dient.

8. Vorrichtung nach Anspruch 7,
bei der der Plattenbiegungsvibrator (4) mit einem Ultraschallvibrator (6) mechanisch verbunden ist.

9. Vorrichtung nach Anspruch 8,
bei der der Plattenbiegungsvibrator (4) einen Vorsprung (103) im Kontakt mit dem nichtmagnetischen Substrat (3) aufweist.

10. Vorrichtung nach Anspruch 9,
bei der eine Mehrzahl von Vorsprüngen (103) in gleichen Winkelabständen am Umfang als der Vorsprung vorgesehen sind.

11. Vorrichtung nach Anspruch 7,
bei der wenigstens ein Paar von Magneten (12, 12′) auf beiden Seiten des nichtmagnetischen Substrats (3) unter Einfassung des nichtmagnetischen Substrats (3) dazwischen vorgesehen ist, wodurch ein Längsmagnetfeld an den magnetischen Aufzeichnungsfilm (100, 100′) angelegt wird.

## Revendications

1. Procédé pour fabriquer un disque magnétique, qui comprend l'application d'une peinture magnétique contenant au moins des poudres magnétiques dans un état de dispersion dans un liant macromoléculaire, à un sustrat amagnétique (3), puis l'orientation des poudres magnétiques par application de vibrations au substrat amagnétique (3), de manière à former une pellicule d'enregistrement magnétique (100, 100′) sur le substrat amagnétique (3),
caractérisé en ce que
lesdits vibrations sont des vibrations planes de flexion (104, 105) d'un mode de type à cercles concentriques ou d'un mode de type aléatoire ou d'un mode de type interférentiel et que la peinture magnétique appliquée est maintenue dans un état non séché lors de l'application desdites vibrations planes de flexion.

2. Procédé selon la revendication 1, dans lequel les vibrations de flexion sont des ondes stationnaires (104) ou des ondes interférentielles (105).

3. Procédé selon la revendication 1, dans lequel un champ magnétique est appliqué longitudinalement lorsque les vibrations planes de flexion (104,105) sont appliquées au substrat amagnétique (3) et à la peinture magnétique appliquée.

4. Procédé selon la revendication 3, dans lequel les poudres magnétiques sont des poudres en forme de paillettes, de ferrite de baryum à système hexagonal.

5. Disque magnétique fabriqué au moyen du procédé selon la revendication 1, qui comporte un substrat amagnétique (3) et une pellicule d'enregistrement magnétique (100,100′) contenant au moins des poudres magnétiques dans un état dispersé et orienté dans un liant macromoléculaire, prévu sur le substrat amagnétique (3),
caractérisé en ce que
les poudres magnétiques sont réparties suivant des cercles concentriques (101) avec un gradient de densité dans la direction radiale et orientées longitudinalement.

6. Disque magnétique selon la revendication 5, dans lequel le gradient de densité est prévu de façon répétée dans la direction radiale.

7. Dispositif pour fabriquer un disque magnétique, qui comprend un support (2) servant à supporter un substrat amagnétique possédant une pellicule d'enregistrement magnétique (100, 100′) contenant au moins des poudres magnétiques dans un état dispersé dans un liant macromoléculaire, la pellicule d'enregistrement magnétique (100,100′) étant dans un état non séché, et un vibrateur (4) servant à provoquer des vibrations au substrat amagnétique (3) muni de la pellicule d'enregistrement magnétique (100,100′),
caractérisé en ce que
ledit vibrateur (4) sert à appliquer des vibrations planes de flexion audit substrat (3) alors que la pellicule d'enregistrement magnétique (100, 100′) est dans un état non séché.

8. Dispositif selon la revendication 7, dans lequel ledit vibrateur (4) produisant des vibrations planes de flexion est raccordé mécaniquement à un vibrateur à ultrasons (6).

9. Dispositif selon la revendication 8, dans lequel ledit vibrateur (4) produisant des vibrations de flexion possède une partie saillante (103) en contact avec le substrat amagnétique (3).

10. Dispositif selon la revendication 9, dans lequel en tant que partie saillante, une pluralité de parties saillantes (103) sont prévues à des distances angulaires égales sur la périphérie.

11. Dispositif selon la revendication 7, dans lequel au moins un couple d'aimants (12,12′) sont prévus des deux côtés du substrat amagnétique (3) pour enserrer entre eux le substrat amagnétique (3), de manière à appliquer un champ magnétique longitudinal à la pellicule d'enregistrement magnétique (100,100′).
